# EUROPÄISCHE PATENTSCHRIFT

(11) **EP 3 720 039 B1**
(45) Veröffentlichungstag und Bekanntmachung des Hinweises auf die Patenterteilung: **04.09.2024**
(21) Anmeldenummer: 19167509.9
(22) Anmeldetag: 05.04.2019
(51) Int. Cl.: G06F 21/57, H04L 9/40, H04L 9/06, H04L 9/08, G06F 21/72

(54) **VERFAHREN FÜR DAS KONFIGURIEREN EINES SICHERHEITSMODULS MIT MINDESTENS EINEM ABGELEITETEN SCHLÜSSEL**
METHOD FOR CONFIGURING A SECURITY MODULE COMPRISING AT LEAST ONE DERIVED KEY
PROCÉDÉ DE CONFIGURATION D'UN MODULE DE SÉCURITÉ AU MOYEN D'AU MOINS UNE CLÉ DÉRIVÉE

(43) Veröffentlichungstag der Anmeldung: 07.10.2020
(73) Patentinhaber: Siemens Aktiengesellschaft, 80333 München (DE)
(72) Erfinder: Falk, Rainer, 85586 Poing (DE); Feist, Christian Peter, 80689 München (DE); Zwanzger, Johannes, 85579 Neubiberg (DE)
(74) Vertreter: Siemens Patent Attorneys

(56) Entgegenhaltungen:
- EP-A1- 2 329 423
- DE-A1- 102015 208 899
- US-A1- 2014 098 953

## Beschreibung

Moderne Datenverarbeitungsanlagen benötigen für kryptographische Operationen wie Verschlüsselung von Daten oder Authentifizierung von Systemen oder (Software-)Modulen untereinander sogenannte Vertrauensanker (Trust Anchor). Ein Trust Anchor oder Trust Point bildet die Basis für den Schutz von Geräten, z.B. IOT-Geräte oder Feldgeräte bzw. Datenverarbeitungsanlagen wie beispielsweise Embedded Systemen oder Steuerrechnern. Mittels eines Trust Anchors kann das Vertrauen in das unkompromittierte Funktionieren der Datenverarbeitungsanlage beim Systemstart und/oder während des laufenden Betriebs gewährleistet werden. Ein Trust Anchor kann einen kryptographischen Schlüssel umfassen, der beispielsweise für einen sicheren Boot-Vorgang oder für die Authentisierung der Datenverarbeitungsanlage oder für das Nutzen einer Schlüsseldatei der Datenverarbeitungsanlage oder für das Bestätigen eines Betriebszustands der Datenverarbeitungsanlage oder für das Überprüfen einer Aktualisierungsdatei (Firmware Update) verwendbar ist. Die Bezeichnung "Anchor" (deutsch: Anker) rührt daher, dass Sicherheits- oder Vertrauensstellungskonzepte der Datenverarbeitungsanlagen den Trust Anchor als Basis nutzen und dabei vorausgesetzt wird bzw. werden muss, dass der Trust Anchor selbst sicher und unkompromittiert ist.

Ein bekannter Trust Anchor ist beispielsweise das durch ISO/IEC 11889 im Jahre 2009 spezifizierte Trusted Platform Module (TPM), das in jedem modernen PC vorhanden ist und von modernen Betriebssystemen für bestimmte kryptographische Operationen zwingend vorausgesetzt wird. Beispielsweise fußt die Festplattenverschlüsselung "BitLocker" des weitverbreiteten Betriebssystems "Windows" auf einem TPM. Es sind jedoch vielfältige andere Realisierungen eines Trust Anchors denkbar, beispielsweise ein Kryptocontroller, ein Authentisierungsbaustein oder ein in eine CPU integriertes Sicherheitselement (Secure Element).

Es ist möglich, ein Sicherheitsmodul mit n≥2 Schlüsseln zu betreiben. Es kann iterativ für alle 1<i≤n ein Schlüssel der Generation i aus dem Schlüssel der Generation i-1 abgeleitet und in einem Speicherabschnitt i gespeichert werden. Es können damit nach Klassen geordnete kryptographische Operationen durchgeführt werden, wobei kryptographische Operationen der k-ten Klasse mit dem im k-ten Speicherabschnitt gespeicherten Schlüssel durchgeführt werden, wobei 1≤k≤n.

Von gespeicherten Schlüsseln können weitere Schlüssel abgeleitet werden, z.B. mittels einer Schlüsselableitungsfunktion (Key Derivation Function, KDF). Die Ableitung von Schlüsseln basiert auf statischen Eigenschaften. Beispielsweise erfolgt eine Schlüsselableitung in Abhängigkeit einer Software-Binärdatei, festen Labels in einem Dateisystem, oder hartcodierten Ableitungswerten in einer Firmware. Erlangt ein Angreifer die Kontrolle über einen Teil des Systems, z.B. durch Ausnutzen einer Softwareschwachstelle, sind die abgeleiteten Schlüssel nicht ausreichend geschützt. Insbesondere können die von anderen Softwarekomponenten verwendeten Schlüssel zu jedem Zeitpunkt durch einen Angreifer rekonstruiert (abgeleitet) werden.

Aus US 2014/0098953 A1 ist ein Gerät bekannt, das einen Inhaltsschlüssel erzeugt, welcher von einer Gerätesicherheitsstatusinformation abhängt.

Aus EP 2 329 423 A1 ist eine Messung mit beidem, einem Gerät und insbesondere mit einem Benutzer zu verbinden, bekannt. Ein stabiles Gerät kann von einer PUF-Antwort (physically uncloneable function) und assoziierten Behelfsdaten abgeleitet werden. Die Behelfsdaten können von Kodewörtern eines Fehlerkorrekturkodes ausgewählt werden. Durch die Konstruktion solcher Behelfsdaten ist es möglich, beides, Gerät und Benutzer gleichzeitig zu authentifizieren.

Es ist daher eine Aufgabe der vorliegenden Erfindung, ein Verfahren für die Handhabung von Schlüsseln anzugeben, welches gegenüber dem eingangs Genannten einen verbesserten Schutz gegen Angreifer aufweist.

Es ist Aufgabe der vorliegenden Erfindung, Verfahren und Vor- bzw. Einrichtungen bzw. Geräte mit gegenüber dem oben genannten Stand der Technik zu verbessern.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht ein Verfahren für das Konfigurieren eines Sicherheitsmoduls mit mindestens einem abgeleiteten Schlüssel, aufweisend folgende Schritte:
- Bereitstellen eines Schlüssels;
- Ableiten eines weiteren Schlüssels aus dem bereitgestellten oder aus einem zuvor aus dem bereitgestellten Schlüssel abgeleiteten Schlüssel,
dadurch gekennzeichnet, dass in die Ableitung ein zur Laufzeit dynamisch bestimmter, veränderbarer bzw. variabler digitaler Fingerabdruck als Schlüsselableitungsparameter eingeht bzw. berücksichtigt wird, welcher abhängig von einer gemessenen aktuellen Laufzeitkonfiguration einer mit dem Sicherheitsmodul kommunizierenden Laufzeitumgebung gebildet wird.

Das Konfigurieren des Sicherheitsmoduls erfolgt dabei während der Laufzeit der das Sicherheitsmodul betreibenden Laufzeitumgebung. Dadurch wird abhängig von der tatsächlichen aktuellen Laufzeitkonfiguration das Sicherheitsmodul umkonfiguriert. Dies kann einmalig, vorzugsweise aber wiederholt während der Laufzeit der Laufzeitumgebung erfolgen. Bei der Durchführung der Schlüsselableitung wird der jeweils aktuelle Fingerprint der Laufzeitumgebung ermittelt und davon abhängig erfolgt die Schlüsselableitung. Dabei erfolgen Messungen zur Ermittlung des Fingerprints ebenfalls bei der Durchführung der Schlüsselableitung. Eine Messung kann durch die Laufzeitumgebung selbst erfolgen und dem Sicherheitsmodul bereitgestellt werden. Dazu wird vorzugsweise ein spezieller Fingerprint-Messprozess (oder Fingerprint-Messprozess-Task) in der Laufzeitumgebung zusätzlich zu anderen Prozessen ausgeführt. Der Messprozess kann z.B. durch einen Hypervisor von anderen Prozessen isoliert sein. Die Messung kann jedoch auf einem separaten Rechenkern (Core) einer Mehrkern-Laufzeitumgebung, auf einer separaten Messvorrichtung, z.B. einem separaten Mikrocontroller, oder durch das Sicherheitsmodul selbst erfolgen.

Das Sicherheitsmodul kann Teil eines Gerätes sein. Der bereitgestellte Schlüssel kann ein Masterkey oder Initialschlüssel oder aus diesen abgeleitet sein. In Ausgestaltungen der Erfindung kann der Initialschlüssel so implementiert werden, dass jedweder andere Zugriff unterbunden wird oder physikalisch unmöglich ist.

Die Laufzeitumgebung wird beispielsweise durch eine CPU bzw. Recheneinrichtung gebildet, welche das Sicherheitsmodul anspricht bzw. steuert bzw. mit ihr kommuniziert, wobei durch das erfindungsgemäße Verfahren das Sicherheitsmodul konfiguriert wird.

Die Laufzeiteigenschaften einer regulären, operativen Laufzeitumgebung können erfasst werden und als Eingabeparameter für eine Schlüsselableitung verwendet werden. Die gemessene bzw. überwachbare aktuelle Laufzeitkonfiguration liefert einen Fingerabdruck, der sich bei einem manipulierten System ändert. Manipulationen sind z.B. das Starten eines zusätzlichen Prozesses oder die Integritätsinformation von Betriebsdaten. Der Fingerabdruck wird dynamisch zur Laufzeit bestimmt und geht als Schlüsselableitungsparameter in eine Schlüsselableitungsfunktion oder als Schlüsselbildungsparameter in eine Schlüsselgenerierungsfunktion ein. Dies hat den Vorteil, dass bei einer veränderten Laufzeit-Integritätsinformation kryptographische Schlüssel des nicht-manipulierten Zustands nicht ermittelbar sind.

Der oben genannte Schritt des Ableitens eines weiteren Schlüssels kann (iterativ) ein- oder mehrfach wiederholt werden. Zumindest eine kryptographische Operation kann mit Hilfe des abgeleiteten weiteren Schlüssels durchgeführt werden. Schlüsselwechselereignisse können beispielsweise spezielle Kommandos zur Schlüsselaktualisierung sein oder der Wechsel der übergeordneten Datenverarbeitungsanlage in einen anderen (Betriebs-)zustand. Auch die Ausführung einer kryptographischen Operation kann als Schlüsselwechselereignis dienen, was die Implementierung von Schlüsseln zur lediglich einmaligen Verwendung für eine Operation (z.B. für das Verschlüsseln von Daten) erlaubt, wobei diese Schlüssel anschließend noch für andere Operationen (z.B. für das Entschlüsseln oder Verifizieren) zur Verfügung stehen können.

Die gemessene Laufzeitkonfiguration kann mindestens einen ermittelbaren Zustand der Laufzeitumgebung oder mindestens einen durch einen überwachbaren Ereigniseintritt ausgelösten Zustand der Laufzeitumgebung umfassen. Zustände der Laufzeitumgebung und/oder Ereigniseintritte sind hierbei messbare Laufzeiteigenschaften der Laufzeitumgebung zu einem bestimmten Zeitpunkt. Diese Laufzeitkonfiguration bildet einen variablen Fingerabdruck (Runtime Integrity Fingerprint), der die Integrität sicherstellt. Messbar zu einem bestimmten Zeitpunkt sind z.B. HW-Zähler, Realtimeclock, Meta-Info (zu laufenden Prozessen bzw. zum Dateisystem, Dateieigenschaften, dezidierte Dateien, zustandsbestimmende Sicherheitsmechanismen, statische Daten, Dateiinhalte, Prozessname, Prozessnummer, Prozesspriorität, Watchdog, Benchmarkfunktionen, Zustand der Peripherie, Stromverbrauchsprofil, Profil einer elektromagnetischen Abstrahlung etc.

Vorteilhaft wird eine Einwegfunktion für die Schlüsselableitung verwendet. Eine Einwegfunktion ist eine Funktion, bei der aus dem abgeleiteten Schlüssel nur mit sehr hohem Aufwand (bzgl. Rechenleistung und Speicher) auf den zugrundeliegenden Schlüssel geschlossen werden kann.

Bei den überwachbaren bzw. gemessenen Laufzeiteigenschaften handelt es sich sowohl um statische Eigenschaften (z.B. der Prüfsumme eines read-only Dateisystems), als auch um dynamische Eigenschaften (z.B. die aktuelle Laufzeit des Systems seit einem Power-on Reset - POR). Die wiederholte Ableitung des gleichen Schlüssels wird somit an den Zustand der Laufzeitumgebung gebunden. Ändert sich dieser Zustand, entweder durch das vorgesehene Wechseln der Betriebsphase oder durch Änderungen in Folge eines Angriffs, werden andere Schlüssel abgeleitet. Auch können Seitenkanalinformationen als Fingerprint gemessen werden, z.B. das Zeitverhalten (z.B. Cache Timing) oder das Stromverbrauchsprofil.

Ein Angriff (Änderungen, die zur Laufzeit auftreten, z.B. dem Starten eines schadhaften Prozesses nach Ausnutzen einer Softwareschwachstelle) kann zu einer Veränderung der Laufzeiteigenschaften der Laufzeitumgebung führen. Werden diese in einer Schlüsselableitung berücksichtigt, führen solche Angriffe automatisch dazu, dass nicht mehr die gleichen Schlüssel wie in einem integren Zustand des Gerätes abgeleitet werden können und somit kritische Daten (z.B. verschlüsselte Dateien) vor einem Angreifer besser geschützt werden.

Die vorliegende Erfindung betrifft ferner ein Sicherheitsmodul, ein Gerät sowie ein Computerprogrammprodukt.

Das beanspruchte Sicherheitsmodul ist konfigurierbar mit mindestens einem abgeleiteten Schlüssel, aufweisend:
- eine Empfangseinheit für einen bereitgestellten Schlüssel;
- eine Ableiteinheit zum Ableiten eines weiteren Schlüssels aus dem bereitgestellten oder aus einem zuvor aus dem bereitgestellten Schlüssel abgeleiteten Schlüssel,
gekennzeichnet durch
eine Erzeugungseinheit, die dazu ausgelegt ist, einen zur Laufzeit dynamisch bestimmten, veränderbaren bzw. variablen Fingerabdruck mit Hilfe einer gemessenen aktuellen Laufzeitkonfiguration einer mit dem Sicherheitsmodul kommunizierenden Laufzeitumgebung zu bilden, welcher als Schlüsselableitungsparameter in die Ableitung eingeht.

Das Gerät mit einer Laufzeitumgebung weist ein solches Sicherheitsmoduls auf, gekennzeichnet durch
- eine Bereitstellungseinheit zur Bereitstellung eines Schlüssels und
- eine Messeinheit zum Messen einer aktuellen Laufzeitkonfiguration, mit deren Hilfe ein zur Laufzeit dynamisch bestimmter, variabler Fingerabdruck gebildet wird, welcher als Schlüsselableitungsparameter in eine Ableitung eines weiteren Schlüssels aus dem bereitgestellten oder aus einem zuvor aus dem bereitgestellten Schlüssel abgeleiteten Schlüssels eingeht.

Das Computerprogrammprodukt umfassend computerausführbare Anweisungen, welche, wenn in ein Gerät (z.B. Computer) geladen, zur Durchführung eines Verfahrens nach der oben genannten Art und Ausführungsformen ausgelegt sind.

Des Weiteren ist ein Computerprogramm(produkt) umfassend Programm-Code vorgesehen, der von mindestens einem Prozessor ausgeführt werden kann und der bewirkt, dass der mindestens eine Prozessor das erfindungsgemäße (Betriebs-)Verfahren und dessen Ausführungsformen ausführt. Das Computerprogramm kann auf einem Gerät/Modul bzw. Vorrichtung der vorstehend genannten Art ablaufen oder als Computerprogrammprodukt auf einem computerlesbaren Medium gespeichert sein.

Die Vorrichtungen, Einrichtungen bzw. Geräte, Module und Computerprogramm(produkte) können entsprechend der Weiterbildungen/Ausführungsformen des vorgenannten Verfahrens und deren Weiterbildungen/Ausführungsformen und umgekehrt ausgebildet sein.

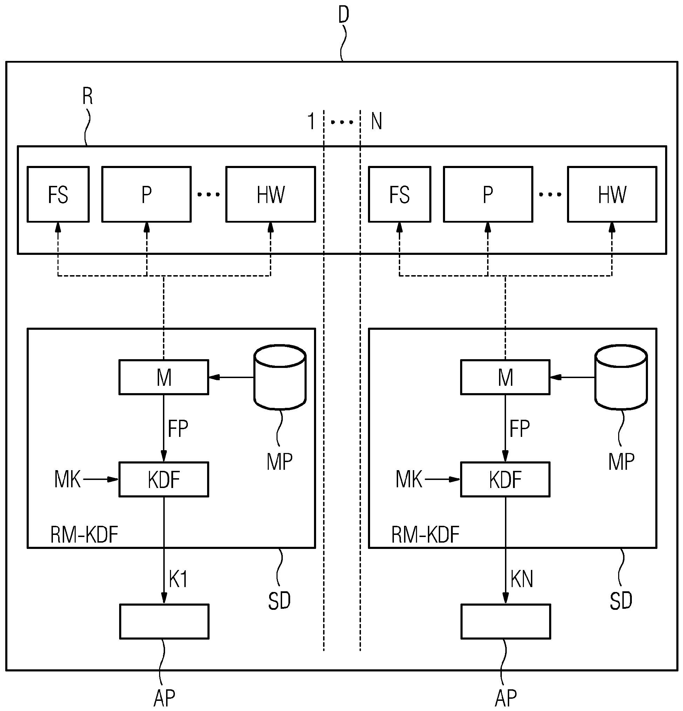

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
Die einzige Figur zeigt in schematischer Darstellung eines Gerätes D. Es sei darauf hingewiesen, dass die Erläuterung der Erfindung im Zusammenhang mit dem Gerät rein beispielhaft und ohne Beschränkung der vorliegenden Erfindung auf ein derartiges Gerät erfolgt.

In der Figur wird ein Gerät D gezeigt. Es wird der Zusammenhang zwischen Laufzeiteigenschaften einer Laufzeitumgebung R, der Aufteilung in N verschiedene Systemzustände S1 bis SN und der Ableitung von entsprechenden Schlüsseln mit Hilfe eines Masterkeys MK dargestellt. Die grundlegende Funktionalität wird durch die Runtime Measurement Key Derivation Function (Laufzeitmessungsschlüsselableitungsfunktion) RM-KDF realisiert, welche in einem in das Gerät D integrierten oder mit dem Gerät D gekoppelten Sicherheitsmodul SD integriert ist. Sie kann auch verteilt realisiert sein, d.h. ein erster Teil der Runtime Measurement Key Derivation Function RM-KDF kann auf dem Sicherheitsmodul integriert, ein zweiter Teil der Runtime Measurement Key Derivation Function RM-KDF mit dem Sicherheitsmodul gekoppelt sein.

Die System- bzw. Laufzeitzustände 1 bis N unterscheiden sich in den Laufzeiteigenschaften einer oder mehrerer Komponenten, z.B. der zu dem Zeitpunkt der Schlüsselableitung laufenden Prozesse P, Dateisystemeigenschaften FS und Hardwarezustände HW wie z.B. dem Wert eines Hardware-Zählers. Soll ein Schlüssel abgeleitet werden, bezieht die RM-KDF Messwerte (z.B. Einweg- bzw. Hashwerte von Dateien) aus der Laufzeitumgebung R. Welche Teile der Laufzeitumgebung gemessen werden sollen, wird dabei durch ein Messregelsystem MP (Measurement Policy) vorgegeben. Die Gesamtheit der Messwerte M, die z.B. mit einem fortlaufenden Hashwert festgehalten werden kann, dient anschließend, zusammen mit einem Master Key MK, als Eingabeparameter für eine Schlüsselableitungsfunktion KDF, z.B. auf Basis von HMAC-SHA256. Entspricht der Zustand einer gemessenen Laufzeitkomponente aufgrund eines Angriffs nicht mehr dem erwarteten, z.B. durch das Starten eines nicht in dem Zustand vorgesehenen Prozesses durch einen Angreifer, wird auch der abgeleitete Schlüssel verändert. Mit dem Schlüssel geschützte Objekte sind somit nur in als gültig definierten Zuständen der Laufzeitumgebung zugänglich.

Die Zustände 1 bis N werden implizit durch die Measurement Policy (Messregel) MP und den Zuständen der gemessenen Laufzeitkomponenten definiert. Die Measurement Policy MP kann für jeden Zustand unterschiedlich, oder für mehrere Zustände gleich sein. Es können dementsprechend mehrere RM-KDFs auf einem Gerät D verwendet werden, welche unterschiedliche Measurement Policies, Ableitungsfunktionen KDFs und / oder Master Keys MK verwenden.

Die Measurement-Policy MP, die Measurement-Funktionen für die Gesamtheit der Messwerte M und Schlüsselableitungsfunktionen KDF können prinzipiell entweder in Software- oder Hardwarekomponenten realisiert werden. Der zur Ableitung verwendete Master Key MK kann dabei entweder in Hardware gespeichert werden (z.B. Hardware-based Trust Anchor), oder in Software (z.B. als Teil einer obfuskierten Routine) implementiert sein.

Im Folgenden werden mehrere Möglichkeiten für messbare Laufzeiteigenschaften dargestellt. Diese können beliebig zu einer Measurement Policy MP kombiniert werden.
- Bisherige Laufzeit des Gerätes D seit einem Reset, z.B. mittels eines Hardware-Zählers oder einer Realtime Clock (Echtzeituhr). Auch die bisherige Laufzeit der Software, z.B. eines Linux Kernels (/proc/uptime) kann hier verwendet werden.
- Performance-Laufzeitdaten (z.B. CPU-Last, Speicherauslastung, Auslastung von Ein- /Ausgabeschnittstellen, z.B. Netzwerkschnittstellen, DMA-Transfer, Interrupt-Häufigkeit).
- Stromverbrauchsprofil, Profil einer elektromagnetischen Abstrahlung (z.B. zeitlicher Verlauf, Frequenzspektrum)
- Meta-Informationen zu laufenden Prozessen P, z.B. der Benutzer, unter dem ein Prozess läuft, welcher Prozess diesen gestartet hat (Prozessbaum / Parent-Child Beziehung von Prozessen / "Prozesskette"), Prozesspriorität, Prozess-Nummer, SELinux-Domäne eines Prozesses, Namespaces und cgroups, in denen ein Prozess läuft.
- Aktuell eingehängte Dateisysteme und deren Eigenschaften (z.B. read-only). So können auch Schlüssel in Abhängigkeit der vorhandenen, austauschbaren PeripherieBausteine - wie z.B. USB-Dongles - abgeleitet werden.
- Dedizierte Dateien, die die Integrität des aktuellen Systems widerspiegeln. Beispielsweise können sicherheitskritische Ereignisse durch ein Host-Based Intrusion Detection System (HIDS) in spezielle Dateien geschrieben werden, die im Zuge der Schlüsselableitung mitgemessen werden. Eine weitere Möglichkeit ist, Konfigurationsdaten, die ein Einloggen auf das System beschränken (oder sogar ganz verhindern), in die Messung mit einzubeziehen: Bei einem Angriff, bei dem die Konfiguration so verändert wird, dass ein Einloggen wieder möglich ist (insbesondere, um das System zur Laufzeit "von innen" beobachten zu können), werden dann nur noch falsche Schlüssel abgeleitet.
- Der Zustand bestimmter Sicherheitsmechanismen kann miteinbezogen werden. Auf einem Linux-basierten System können so nur die für eine Anwendung richtigen Schlüssel abgeleitet werden, wenn einer oder mehrere Sicherheitsmechanismen in einem bestimmten Zustand sind (z.B. SELinux im "Enforcing" Modus).
- Es können statische Daten, wie beispielsweise eine Hardware-ID, oder Konfigurationsdateien im Dateisystem mitgemessen werden. Wird die Runtime Measurement Key Derivation Function RM-KDF in einer anderen Umgebung ausgeführt (andere Hardware und somit Hardware-ID, andere Konfiguration), oder werden die als statisch angenommenen Dateien manipuliert, werden somit andere Schlüssel abgeleitet.
- Es kann auf das Vorhandensein bestimmter Dateiinhalte geprüft werden, die z.B. aus einer Provisioning-Phase des Gerätes vorhanden sein sollen.
- Meta-Informationen des Dateisystems, wie z.B. die Größe bestimmter Teile, Zugriffs- oder Änderungszeiten, Permissions, Nutzer / Owner, Ziele von symbolischen Links, etc.
- Es kann miteinbezogen werden, wie die Runtime Measurement Key Derivation Function RM-KDF verwendet bzw. aufgerufen wird. So kann diese z.B. die Prozesskette, ausgehend von der aufrufenden Komponente, bis zur Wurzel des Prozessbaumes miteinbeziehen. Dabei können z.B. die Namen der in der Prozesskette enthaltenen Prozesse fortlaufend gehasht und als Teil des Schlüsselableitungsparameters verwendet werden. So kann sichergestellt werden, dass die richtigen Schlüssel nur im Zuge eines vorgesehenen Aufrufs abgeleitet werden können.
- Es kann ein Watchdog (Hardware oder Software-Funktion) miteinbezogen werden, der die Integrität der Laufzeitumgebung überwacht.

Es kann die Ausführungszeit einer speziell vorgesehenen Benchmarkfunktion gemessen werden und diese - mit einem gewissen Spielraum für normale Messvarianzen in die Ableitung mit einbezogen werden. Benötigt die Ausführung einer solchen Funktion beispielsweise 250ms mit einer Standardabweichung (Sigma) von 10ms, ergibt sich bei (Integer-)Division durch 100ms auf einem nicht-manipulierten Gerät mit 5-Sigma-Sicherheit der Wert 2. Einem Angreifer dagegen wird die Reproduktion der abgeleiteten Schlüssel in einer simulierten bzw. emulierten Umgebung erschwert, weil nun zusätzlich auch die Performance des Devices hinreichend genau (im Beispiel: +/- 20%) nachgebildet werden muss.

Die Applikationen, wobei eine Applikation in der Figur beispielsweise mit AP gekennzeichnet ist, können mit Hilfe der Bibliothek zur Laufzeit Schlüssel ableiten, um eine kryptographische Operation mit Hilfe des abgeleiteten Schlüssels durchzuführen. Solche Operation können sicherheitskritische Objekte, beispielsweise verschlüsselte Dateisysteme, oder private Schlüssel für eine TLS-Verbindung schützen und darauf zugreifen. Soll ein Schlüssel abgeleitet werden, verwendet die Runtime Measurement Key Derivation Function RM-KDF die Measurement-Funktion und die Measurement Policy MP, um darin festgelegte Teile der Laufzeitumgebung oder festgelegte Ereignisse zu einem oder mehreren bestimmten Zeitpunkten zu messen bzw. zu ermitteln und als Laufzeitkonfiguration festzulegen. Durch die Measurement-Funktion wird unter Verwendung von dedizierten Kernel-Schnittstellen Informationen zu aktuell eingehängten Dateisystemen (Mounts), dem Zustand gewisser Peripheriebausteine (z.B. FPGA, GPIO, MAC Adresse), der bisherigen Laufzeit des Betriebssystems (Uptime), statische Inhalte aus dem Dateisystem (Filesystem) und den Namen der Prozesse in der Prozesskette des Aufrufers in einem laufenden Hashwert aggregiert. Der aggregierte Wert wird anschließend als Schlüsselableitungsparameter für eine Schlüsselableitungsfunktion mit dem Master Key MK verwendet. Der abgeleitete Schlüssel K1 bis KN ist je nach aufrufender Applikation unterschiedlich, da diese unterschiedlichen Prozessketten angehören.

Ein aus der Laufzeitkonfiguration gebildeter variabler Fingerabdruck FP und das Berücksichtigen als Schlüsselableitungsparameter können als eine Konfiguration des Sicherheitsmoduls betrachtet werden. Die Applikationen können diese abgeleiteten Schlüssel z.B. für den Zugriff auf private Dateisysteme verwenden. Versucht ein Angreifer mittels eines weiteren Prozesses ebenfalls mit Hilfe der Runtime Measurement Key Derivation Function RM-KDF einen Schlüssel abzuleiten, so wird dieser anders sein. Sowohl Offline-, als auch Online-Angriffe verändern in der Regel dynamische Eigenschaften einer Laufzeitumgebung (z.B. Konfigurationsdateien, Optionen von eingehängten Dateisystemen). Der Zugriff auf Schlüssel aus gültigen Zuständen wird somit stark erschwert.

Die Erfindung hat den Vorteil, dass der Zugriff auf Schlüssel an den aktuellen Zustand von statischen und insbesondere dynamischen Eigenschaften der Laufzeitumgebung gebunden werden kann. Bei Eingriff in die Laufzeitumgebung (phys. Angriff, remote Angriff) kann die Schlüsselableitung beeinflusst werden und somit gültige Schlüssel in einer nicht vertrauenswürdigen Umgebung nicht mehr abgeleitet werden. Weiterhin kann die Zustandsabhängigkeit bewusst eingesetzt werden, um unterschiedliche Schlüssel zu unterschiedlichen Laufzeitphasen in Software bereitzustellen. Dies hat speziell den Vorteil, dass im Falle einer kompromittierten Laufzeitphase nicht die Schlüssel der aktuellen, als auch der anderen Phasen abgeleitet werden können.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Das Gerät D kann ein oder mehrere Prozessoren aufweisen. Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren für das Konfigurieren eines Sicherheitsmoduls (SD) mit mindestens einem abgeleiteten Schlüssel, aufweisend folgende Schritte:
- Bereitstellen eines Schlüssels (MK);
- Ableiten (KDF) eines weiteren Schlüssels (K1 bis KN) aus dem bereitgestellten oder aus einem zuvor aus dem bereitgestellten Schlüssel abgeleiteten Schlüssel,
**dadurch gekennzeichnet, dass** in die Ableitung ein zur Laufzeit dynamisch bestimmter, veränderbarer digitaler Fingerabdruck (FP) als Schlüsselableitungsparameter eingeht, welcher abhängig von einer gemessenen aktuellen Laufzeitkonfiguration einer mit dem Sicherheitsmodul kommunizierenden Laufzeitumgebung (R) gebildet wird.

2. Verfahren nach dem vorhergehenden Anspruch, **dadurch gekennzeichnet, dass** der Schritt des Ableitens eines weiteren Schlüssels ein- oder mehrfach wiederholt wird.

3. Verfahren nach einem der vorhergehenden Ansprüche, **dadurch gekennzeichnet, dass** zumindest eine kryptographische Operation mit Hilfe des abgeleiteten weiteren Schlüssels durchgeführt wird.

4. Verfahren nach einem der vorhergehenden Ansprüche, **dadurch gekennzeichnet, dass** die gemessene Laufzeitkonfiguration mindestens einen ermittelbaren Zustand (1 bis N) der Laufzeitumgebung (R) oder mindestens einen durch einen überwachbaren Ereigniseintritt ausgelösten Zustand der Laufzeitumgebung umfasst.

5. Sicherheitsmodul (SD), konfigurierbar mit mindestens einem abgeleiteten Schlüssel, aufweisend:
- eine Empfangseinheit für einen bereitgestellten Schlüssel (MK) ;
- eine Ableiteinheit (KDF) zum Ableiten eines weiteren Schlüssels (K1 bis KN) aus dem bereitgestellten oder aus einem zuvor aus dem bereitgestellten Schlüssel abgeleiteten Schlüssel,
**gekennzeichnet durch**
eine Erzeugungseinheit, die dazu ausgelegt ist, einen zur Laufzeit dynamisch bestimmten, veränderbaren Fingerabdruck (FP) mit Hilfe einer gemessenen aktuellen Laufzeitkonfiguration einer mit dem Sicherheitsmodul kommunizierenden Laufzeitumgebung (R) zu bilden, welcher als Schlüsselableitungsparameter in die Ableitung eingeht.

6. Gerät (D) mit einer Laufzeitumgebung (R), aufweisend ein Sicherheitsmodul (SD) nach dem vorhergehenden Anspruch, **gekennzeichnet durch**
- eine Bereitstellungseinheit zur Bereitstellung eines Schlüssels (MK) und
- eine Messeinheit (M) zum Messen einer aktuellen Laufzeitkonfiguration, mit deren Hilfe ein zur Laufzeit dynamisch bestimmter, veränderbarer Fingerabdruck (FP) gebildet wird, welcher als Schlüsselableitungsparameter in eine Ableitung eines weiteren Schlüssels (K1 bis KN) aus dem bereitgestellten oder aus einem zuvor aus dem bereitgestellten Schlüssel abgeleiteten Schlüssel eingeht.

7. Computerprogrammprodukt umfassend computerausführbare Anweisungen, welche, wenn geladen in ein Gerät, zur Durchführung eines Verfahrens nach einem der vorhergehenden Verfahrensansprüche ausgelegt sind.

## Claims

1. Method for configuring a security module (SD) with at least one derived key, comprising the following steps:
- providing a key (MK);
- deriving (KDF) a further key (K1 to KN) from the provided key or from a key derived beforehand from the provided key,
**characterized in that** a changeable digital fingerprint (FP) is incorporated into the derivation as a key derivation parameter, this fingerprint being determined dynamically at runtime and being formed on the basis of a measured current runtime configuration of a runtime environment (R) communicating with the security module.

2. Method according to the preceding claim, **characterized in that** the step of deriving a further key is repeated once or multiple times.

3. Method according to either of the preceding claims, **characterized in that** at least one cryptographic operation is performed using the derived further key.

4. Method according to one of the preceding claims, **characterized in that** the measured runtime configuration comprises at least one ascertainable state (1 to N) of the runtime environment (R) or at least one state of the runtime environment that is triggered by the occurrence of a monitorable event.

5. Security module (SD), able to be configured with at least one derived key, having:
- a reception unit for a provided key (MK);
- a derivation unit (KDF) for deriving a further key (K1 to KN) from the provided key or from a key derived beforehand from the provided key,
**characterized by**
a generation unit that is designed to form a changeable fingerprint (FP) using a measured current runtime configuration of a runtime environment (R) communicating with the security module, which fingerprint is determined dynamically at runtime and is incorporated into the derivation as a key derivation parameter.

6. Device (D) having a runtime environment (R), having a security module (SD) according to the preceding claim, **characterized by**
- a provision unit for providing a key (MK) and
- a measurement unit (M) for measuring a current runtime configuration, which is used to form a changeable fingerprint (FP) that is determined dynamically at runtime and is incorporated, as a key derivation parameter, into a derivation of a further key (K1 to KN) from the provided key or from a key derived beforehand from the provided key.

7. Computer program product comprising computer-executable instructions that, when loaded into a device, are designed to perform a method according to one of the preceding method claims.

## Revendications

1. Procédé de configuration d'un module de sécurité (SD) avec au moins une clé dérivée, comprenant les étapes ci-dessous consistant à :
- fournir une clé (MK) ;
- dériver (KDF) une clé (K1 à KN) supplémentaire à partir de la clé fournie ou à partir d'une clé précédemment dérivée à partir de la clé fournie,
**caractérisé en ce qu'**un dactylogramme numérique (FP) modifiable, déterminé de manière dynamique au moment de l'exécution et formé en fonction d'une configuration d'exécution actuelle mesurée d'un environnement d'exécution (R) communiquant avec le module de sécurité, intervient dans l'étape de dérivation en tant que paramètre de dérivation de clé.

2. Procédé selon la revendication précédente, **caractérisé en ce que** l'étape de dérivation d'une clé supplémentaire est répétée une ou plusieurs fois.

3. Procédé selon l'une quelconque des revendications précédentes, **caractérisé en ce qu'**au moins une opération cryptographique est mise en oeuvre à l'aide de la clé supplémentaire dérivée.

4. Procédé selon l'une quelconque des revendications précédentes, **caractérisé en ce que** la configuration d'exécution mesurée comprend au moins un état déterminable (1 à N) de l'environnement d'exécution (R) ou au moins un état, déclenché par une survenue d'événement pouvant être surveillée, de l'environnement d'exécution.

5. Module de sécurité (SD), pouvant être configuré avec au moins une clé dérivée, comprenant :
- une unité de réception destinée à une clé (MK) fournie ;
- une unité de dérivation (KDF) permettant de dériver une clé (K1 à KN) supplémentaire à partir de la clé fournie ou à partir d'une clé précédemment dérivée à partir de la clé fournie,
**caractérisé par**
une unité de génération conçue afin de former, à l'aide d'une configuration d'exécution actuelle mesurée d'un environnement d'exécution (R) communiquant avec le module de sécurité, un dactylogramme (FP) modifiable déterminé de manière dynamique au moment de l'exécution et intervenant dans l'étape de dérivation en tant que paramètre de dérivation de clé.

6. Appareil (D) avec un environnement d'exécution (R), comprenant un module de sécurité (SD) selon la revendication précédente, **caractérisé par**
- une unité de fourniture permettant la fourniture d'une clé (MK) ; et
- une unité de mesure (M) permettant de mesurer une configuration d'exécution actuelle à l'aide de laquelle est formé un dactylogramme (FP) modifiable, déterminé de manière dynamique au moment de l'exécution et intervenant en tant que paramètre de dérivation de clé dans l'étape de dérivation d'une clé (K1 à KN) supplémentaire à partir de la clé fournie ou à partir d'une clé précédemment dérivée à partir de la clé fournie.

7. Produit-programme informatique comprenant des instructions exécutables par ordinateur et conçues afin d'exécuter un procédé selon l'une quelconque des revendications précédentes lorsqu'elles sont chargées dans un appareil.
